# EUROPEAN PATENT SPECIFICATION

(11) **EP 2 878 476 B1**
(45) Date of publication and mention of the grant of the patent: **05.02.2020**
(21) Application number: 14189169.7
(22) Date of filing: 16.10.2014
(51) Int. Cl.: B60K 15/03, B65D 6/34, B65D 81/02, B29C 45/16, B29L 31/00

(54) **FUEL TANK FOR A VEHICLE WITH IMPROVED FIRE RESISTANCE AND METHOD FOR THE MANUFACTURE THEREOF**
KRAFTSTOFFTANK FÜR EIN FAHRZEUG MIT VERBESSERTER FEUERBESTÄNDIGKEIT UND VERFAHREN ZU DESSEN HERSTELLUNG
RÉSERVOIR DE CARBURANT POUR UN VÉHICULE À RÉSISTANCE AU FEU AMÉLIORÉE ET SON PROCÉDÉ DE FABRICATION

(30) Priority: 16.10.2013 IT TO20130837
(43) Date of publication of application: 03.06.2015
(73) Proprietor: Plastic Components and Modules Automotive S.p.A., 10137 Torino (TO) (IT)
(72) Inventor: Parola, Enrico, 10071 Borgaro Torinese (Torino) (IT); Iacobone, Pasquale, 85025 Melfi (Potenza) (IT); Valentin, Etienne, 10129 Torino (IT)
(74) Representative: Deambrogi, Edgardo

(56) References cited:
- EP-A1- 1 442 910
- WO-A1-2012/045762
- JP-A- 2003 128 059
- JP-A- 2004 098 886
- US-A- 5 030 406
- US-A1- 2006 014 011

## Description

The present invention relates to fuel tanks for vehicles and more specifically relates to a tank according to the preamble of Claim 1 and to a method for manufacturing a fuel tank according to the preamble of Claim 8.

A fuel tank of a vehicle must have physical and structural characteristics which are determined by its intended use, the most important characteristic being the total or near-total impermeability to fuel vapours.

In order to obtain petrol-vapour impermeability characteristics various forming techniques for the production of multi-layer tanks are known, these comprising a barrier layer, typically made of ethyl vinyl alcohol (EVOH), and a containment or structural layer, typically made of polyethylene (PE), bonded to the barrier layer by means of intermediate adhesive layers.

Extrusion and blowing techniques may be used to obtain a single-piece, bowl-shaped, tank body having a multi-layer structure comprising an inner structural layer and an outer structural layer made of polyethylene and an intermediate barrier layer made of EVOH, whose joining with the polyethylene structural layers is ensured by means of compatibilizing adhesive layers. This type of shell may be obtained using extrusion and blowing machines equipped with a head for the simultaneous extrusion of several layers.

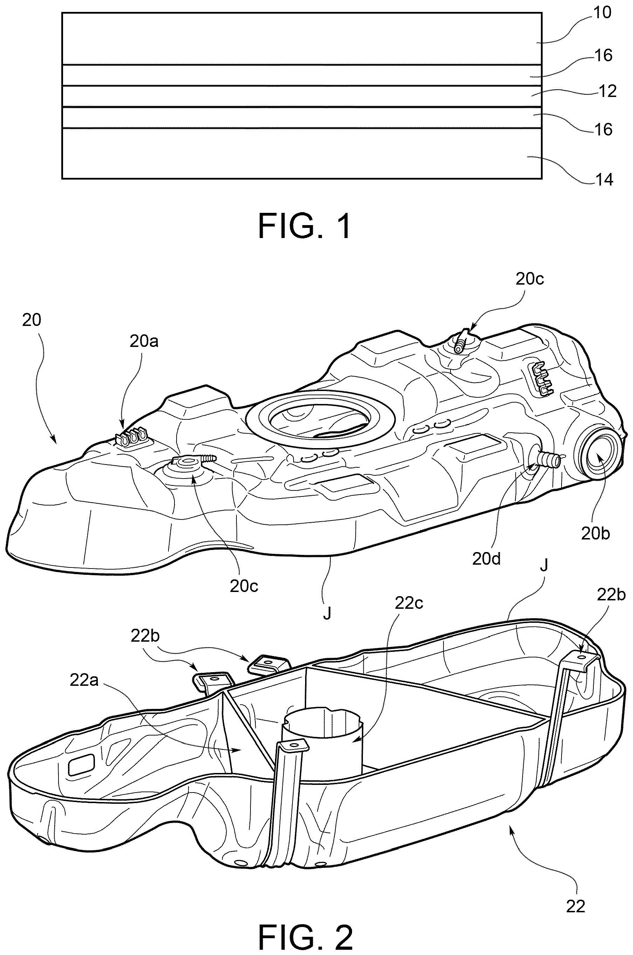

A wall section of the body of a tank obtained by means of extrusion and blowing techniques is shown in Figure 1, where 10 denotes an inner layer of polyethylene for containing the liquid, 12 denotes a barrier layer made of EVOH, impermeable to petrol vapours, and 14 denotes a structural outer layer, again made of polyethylene. A compatibilizing adhesive layer 16, adapted to ensure bonding together of the two materials, which otherwise are incompatible, is arranged between each polyethylene layer and the EVOH intermediate layer.

Techniques for thermoforming multi-layer sheets constitute an alternative to extrusion and blowing and are able to produce separate half-shells with the same structure of alternate containment and barrier layers, these being then joined together by means of perimetral welding.

Injection moulding techniques for the manufacture of half-shells made of polyethylene material are known, these half-shells being then welded together to form a receptacle suitable for containing water, oil or gas fuel so that there is no risk of vapour permeability, but being unsuitable for creating a barrier for the vapours of hydrocarbons (fuels used in the automotive sector).

The strict European directives governing fuel tanks, in particular European Directive 70/221/CEE and the fire resistance type-approval standard defined in it under section 6.3.5., stipulate that a fuel tank for vehicles must satisfy predetermined fire resistance requirements when exposed to flames during a predetermined test period, following which there must not be any loss of liquid fuel.

A relevant prior art fuel tank and a corresponding method for manufacturing a fuel tank is known from JP 2004 098886 A.

The object of the present invention is to provide a multi-layer fuel tank which has improved fire resistance properties compared to the known tanks.

According to the present invention this object is achieved by means of a tank having the features mentioned in Claim 1 and by means of a method for manufacturing a fuel tank having the features mentioned in Claim 8.

Particular embodiments form the subject of the dependent claims, the contents of which are to be understood as forming an integral part of the present description.

In brief, the present invention is based on the principle of providing a fuel tank made of two opposite half-shells which are obtained by injection-moulding at least two layers of material, respectively a polyethylene material compatibilized with a carbon-based filler and a barrier material, for example EVOH, the half-shells being then joined together by means of laser welding. "Polyethylene material compatibilized with a carbon-based filler" is understood as meaning, in particular, a mixture of polyethylene and an agent for promoting bonding with EVOH, known in the art, such as a low-density polyethylene to which maleic anhydride has been added, further enriched with a carbon nanotube based filler in small percentage amounts by weight, for example 1 to 20% by weight and preferably 1 to 5% by weight.

Advantageously, the tank structure according to the invention has improved fire resistance properties due to the properties of the carbon nanotubes which migrate towards a flame-exposed surface area and form a protective mask against combustion for the rear-lying material.

Even more advantageously, the tank according to the present invention, which may be possibly obtained by means of the method claimed, has improved properties with regard to the welding together of component half-shells owing to the effect of the carbon-based filler, for example carbon nanotubes.

Further characteristic features and advantages of the invention will be described in greater detail in the following detailed description of an embodiment thereof provided by way of a non-limiting example, with reference to the accompanying drawings, in which:
Figure 2 shows a three-dimensional illustration of two half-shells of a tank according to the invention;
Figure 3 shows a cross-sectional view of a wall of the tank half-shells according to the invention;
Figure 4 is a diagrammatic illustration of the displacement of a carbon nanotube filler inside a polyethylene material matrix;
Figure 5 is a diagrammatic illustration of a rotary mould used in a method for manufacturing a tank according to the invention;
Figures 6a and 6b are cross-sectional views of two embodiments of an opening formation in a half-shell of the tank; and
Figure 7 is a comparative graph for the absorption of laser radiation in a material made of pure polyethylene and the absorption of laser radiation in a polyethylene material with 1% by weight of a carbon nanotube filler.

Figure 2 shows two oppositely arranged half-shells 20, 22 of a fuel tank for a vehicle, which can be assembled together to form a tank body which is impermeable to hydrocarbons. As can be seen, the outer or convex surface of the half-shell 20 shown has a fastening system 20a for petrol-vapour pipes, a connection 20b for introducing the fuel, valve bodies 20c of a system for ventilating and recirculating air containing hydrocarbons, and a connection 20d for a breather duct. As can be seen, the inner or concave surface of the half-shell 22 shown has ribs 22a for reinforcing the tank structure, which also perform the function of anti-surge baffles, systems 22b for fixing the tank to the vehicle body and a calming reservoir 22c for a fuel suction unit.

The tank is advantageously a multi-layer tank comprising a first, outer, structural or containment layer S, made of a mixture of polyethylene material, for example HD-PE, of compatibilizing material, for example a low-density polyethylene to which maleic anhydride has been added, and of a carbon-based filler, such as a carbon nanotube filler N preferably of between 1% and 20% by weight, even more preferably a carbon nanotube filler of between 1 and 5% by weight. The tank comprises a second, inner, hydrocarbon barrier layer B made of EVOH and stably bonded to the structural containment layer S owing to the effect of the compatibilizing material, the function of which is that of an agent promoting bonding with the EVOH, so as to ensure the structural integrity of the tank.

In an alternative embodiment the multi-layer tank comprises a first outer layer B forming a barrier against hydrocarbons and a second, inner, structural or containing layer S.

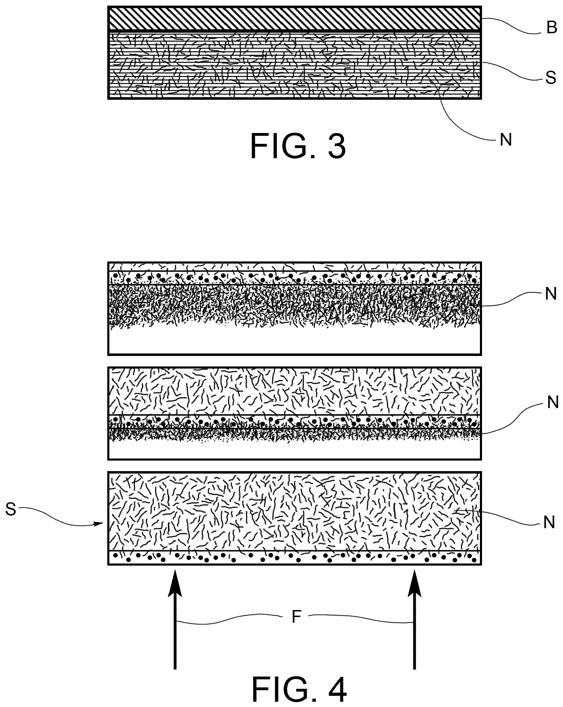

This structure is shown in diagrammatic form in Figure 3.

From experiments carried out it is known that mixtures of polyethylene with small percentages (1%-5%) of carbon nanotubes of the MultiWall Carbon Nanotube (MCNT) type with a typical diameter of 10 nanometres and with an aspect ratio in the region of 1/100 may not only improve the structural characteristics of polyethylene, but acquire fire-retarding properties.

According to a preferred embodiment the half-shells 20, 22 of the tank are made in such a way as to form respectively an upper half-shell 20 and a lower half-shell 22 of the tank, where the terms "upper" and "lower" are used with reference to the mounting position of the tank on a vehicle. Said half-shells have a perimetral welding line J which lies preferably, but not necessarily, in a horizontal plane with respect to the mounting position of the tank on a vehicle.

Advantageously, only the lower half-shell 22 of the tank has a structural layer S with added carbon nanotube filler if the lower half-shell has a shape acting as a screen for the upper half-shell, the latter not being directly exposed to the flames in the event of a fire.

The mechanism which helps improve the fire resistance, namely increases the flame resistance time of the structural layer containing a carbon nanotube filler, may be described as follows, with reference to the diagrammatic illustration shown in Figure 4:
- migration and accumulation of the carbon nanotubes N towards the flame-exposed surface (indicated by the arrows F);
- creation of a screening effect which limits, in this way, diffusion of the products of the degradation of the matrix of polyethylene material; and
- achieving protection of the underlying polymer layers against oxidation, with a significant increase in the resistance and combustion times of the product.

Each half-shell is obtained by means of injection overmoulding of the component layers, carried out in two successive steps.

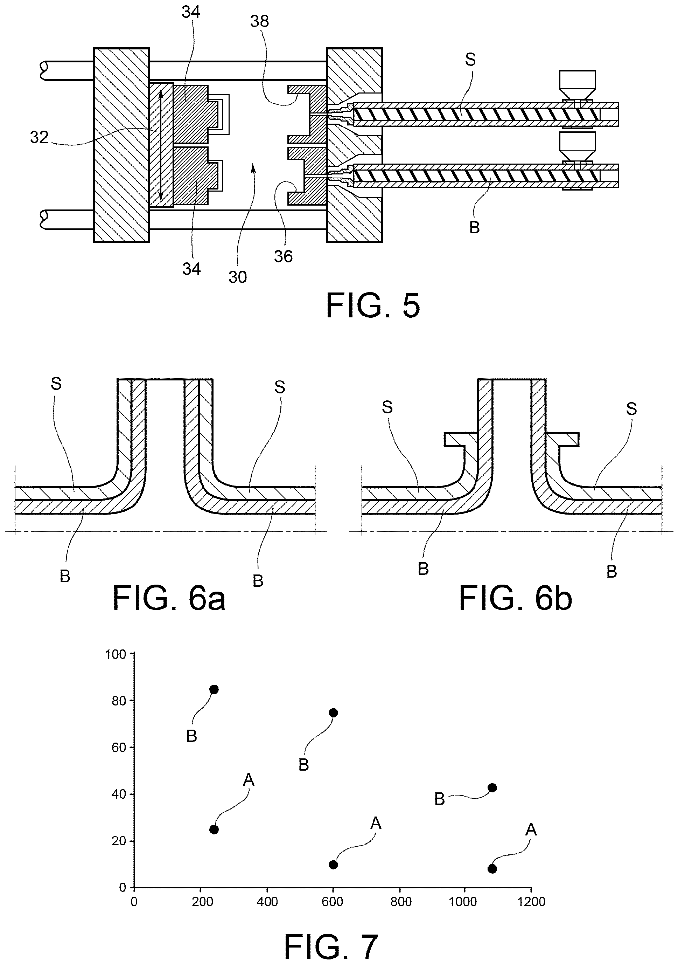

Figure 5 shows a diagrammatic illustration of an injection system designed to implement an injection-moulding method according to the invention for the manufacture of a tank in the first embodiment, where the barrier layer B is the inner layer of the tank and the structural containment layer S is the outer layer.

In a same processing chamber 30 the system has a rotating or translating support 32 carrying a pair of identical punches 34 opposite which two differently shaped moulding dies are arranged, in particular a first moulding die 36 and a second moulding die 38, in order of operation, which are designed to mould a half-shell 20, 22 of the fuel tank. A first extruder unit for injecting the material forming the barrier layer B is associated with the first moulding die 36, and a second extruder unit for injecting the material forming the structural layer S, preferably with an added compatibilizing substance, namely a substance for promoting the chemical/physical adhesion to the material forming the barrier layer B, is associated with the second moulding die 38.

The first moulding die 36 has a cavity with a predetermined shape, depending on the desired volume of the tank, which defines the inner surface of the tank and associated surface holes and opening formations.

The second moulding die 38 has a corresponding cavity, enlarged with respect to the cavity of the first moulding die 36, and in particular the cavity of the second moulding die 38 has overall a shape geometrically similar to the shape of the cavity of the first moulding die 36, but enlarged at least in one direction of extension of the mould, preferably in two directions of extension of the mould and even more preferably in the three perpendicular directions of the mould.

Advantageously, the shape of the cavity of the second moulding die may differ from the shape of the cavity of the first moulding die in one or more localized areas, of limited extension with respect to the surface of the entire die, in the areas where integrated accessory components are to be formed. This allows the moulding of said accessory components together with the structural layer S of a respective half-shell of the tank body.

During a first step of a method for the production of the tank, for each half-shell of the tank body, moulding of the barrier layer is performed on a punch 34 by means of the first die 36. Then the support 32 is rotated or displaced and a new punch is exposed to the first moulding die 36 for renewed moulding of the barrier layer of a new half-shell. At the same time the punch carrying the moulded barrier layer is exposed to the second moulding die 38 and overmoulding of the structural layer S is performed on it.

It should be noted that, for correct execution of this second overmoulding step, the second moulding die 38 must have a cavity forming an envelope of the punch and barrier layer moulded on it, in at least one direction of extension of the half-shell perpendicular to the direction of mating of the die and punch, and preferably in each direction of extension of the half-shell perpendicular to the direction of mating of the die and punch. The step of overmoulding the material forming the structural layer must be carried out without any gap being formed between the layers. The material forming the structural layer may occupy the mould entirely or have recesses or gaps in the surface, as shown in Figures 6a and 6b. In this way it is advantageously possible to have opening formations of the barrier layer which emerge on the outside of the tank and which can be used, for example, to provide connections for a system for ventilating and recirculating air containing hydrocarbons, to which low-permeability pre-formed multi-layer pipes may be connected by means of quick-fixing systems, or provide integrally in the structural layer S, barrier layer B or both the layers projecting formations adapted to form an access inlet into the tank or connections to external ducts, for example formations including a connection for introducing the fuel or a connection for a pipe for ventilating air or vapours during supplying of the fuel.

Preferably, moulding is performed at a temperature of the nozzle for injecting the material of the structural layer S (for HDPE mixtures) ranging between 190°C and 260°C, at a temperature of the nozzle for injecting the material of the barrier layer B (with EVOH) ranging between 170°C and 260°C and with a temperature of the mould of up to 80°C and preferably constant operating pressures of between 20 bar and 50 bar. Since the co-injection and overmoulding are performed in the same processing chamber 30 for both the materials (layers), overmoulding of the structural layer S by means of the second die 38 is performed when the material of the barrier layer moulded by means of the first die 36 has a solid form, albeit not in a melt state, since it is not extracted from the chamber 30 of the injection system. For example, overmoulding of the structural layer is performed when the material of the barrier layer has a temperature higher than the ambient temperature and approximately at a temperature of the part ranging between 80°C and 140°C, far from the moulding melting temperature of about 200°C.

Both the half-shells 20, 22 forming the tank body are moulded in the manner described.

The two moulded half-shells, which are subsequently cooled, are then joined together by means of known welding techniques (laser, vibration or infrared welding), for example butt-welding of the respective edges along the perimeter of the half-shells or using other contact or joining configurations between the half-shells - except for the tank access inlet so as to obtain at least continuous welding of the respective barrier layers.

The use of laser welding is to be preferred since it produces limited localized heating and melting effects, avoiding extensive deformation and deterioration of the materials.

The carbon nanotube filler N in a matrix of polyethylene material also provides a technological advantage in the tank manufacturing method.

It can be demonstrated that, in the case of welding of polymer materials by laser sources, especially the welding together of two sheets of polyethylene material, at least one of which has added carbon nanotubes, the presence of a carbon nanotube filler in low percentage amounts, in the region of 1-5%, increases the strength of the joint which is formed.

The carbon nanotubes act as catalysts of the radioactive absorption, increasing locally the absorption percentage of the radiation irradiated by means of a laser, raising it from 20-30% to threshold values of 80-90%, depending on the wavelength of the incident radiation.

Figure 7 shows a graph comparing experimental results for the percentage absorption of laser radiation striking a material of pure polyethylene (A) at a wavelength of 240, 600 and 1080 nm and the percentage absorption of laser radiation striking polyethylene with 1% by weight of carbon nanotube filler (B) at the same wavelengths.

Conveniently, the joint which is created between the structural layers of the two half-shells 20, 22 of the tank, where the upper half-shell 20 has a structural layer formed by a mixture of polyethylene with an added compatibilizing agent for adhesion to the EVOH barrier layer, and the lower half-shell 22 has a structural layer formed by a mixture of polyethylene with an added compatibilizing agent for adhesion to the EVOH barrier layer and with a carbon nanotube filler, has mechanical resistance properties which are significantly improved since a perimetral welding seam with increased strength is formed along the perimetral welding line of the two half-shells.

The percentage of nanotube filler in the polymer matrix and the wavelength of the laser welding beam are the parameters which influence the mechanical strength of the weld.

The depth of the weld may be also be adjusted by modifying the amount of carbon nanotube filler: low percentage amounts of about 1% by weight produce strong welds, while weak welds are produced by high percentage amounts (5% or more) of nanotubes.

The resultant tank has a continuous inner barrier layer B between the original half-shells and a structural outer layer S, which is overmoulded on the barrier layer, more firmly welded along the joining perimeter of the half-shells and which has improved fire resistance properties. In the embodiment shown, the structural layer has in localized areas formations for integrating functional components, such as valve bodies, pipes, level indicators, anti-surge baffles or retaining and fixing systems.

Obviously, without altering the principle of the invention, the embodiments and the constructional details may be greatly varied with respect to that described and illustrated purely by way of a non-limiting example, without thereby departing from the scope of the invention as defined in the accompanying claims.

## Claims

1. Tank comprising a first and a second half-shell (20, 22) comprising a hydrocarbon barrier layer (B) made of a first material and a structural containment layer (S) made of a second material, forming respectively an inner hydrocarbon barrier layer and an outer structural containment layer, or an inner structural containment layer and an outer hydrocarbon barrier layer, wherein said outer layer is overmoulded on said inner layer,
wherein said half-shells are joined along a perimeter line of contact (J) in such a way as to obtain at least continuity of the respective barrier layers, and
**characterized in that** the second material of said structural layer includes a carbon nanotube filler (N) located at a flame-exposed surface and forming a protective mask against combustion for the rear-lying material.

2. Tank according to Claim 1, wherein said first material adapted to form a barrier layer is EVOH and said second material adapted to form the structural containment layer is a mixture of polyethylene, an agent for promoting bonding with EVOH and a carbon nanotube filler.

3. Tank according to Claim 2, wherein said carbon nanotube filler is a filler of between 1% and 20% by weight.

4. Tank according to Claim 3, wherein said carbon nanotube filler is a filler of between 1% and 5% by weight.

5. Tank according to any one of the preceding claims, comprising an upper half-shell (20) and a lower half-shell (22), wherein the second material adapted to form the structural containment layer of the upper half-shell is a mixture of polyethylene and an agent for promoting bonding with EVOH, and the second material adapted to form the structural containment layer of the lower half-shell is a mixture of polyethylene, an agent for promoting bonding with EVOH and a carbon nanotube filler.

6. Tank according to any one of the preceding claims, wherein an outer layer has in localized areas formations for integrating functional components of the tank, and wherein said formations for integrating functional components of the tank include opening formations in the barrier layer and surface holes in the structural containment layer adapted to expose said opening formations of the barrier layer.

7. Tank according to Claim 6, wherein said opening formations in the barrier layer and said surface holes in the structural containment layer include formations which project from the structural containment layer and/or the barrier layer and are adapted to form an inlet for accessing the tank or connections with external conduits.

8. Method for manufacturing a fuel tank with a multilayer structure including a hydrocarbon barrier layer (B) made of a first material and a structural containment layer (S) made of a second material, forming respectively an inner hydrocarbon barrier layer and an outer structural containment layer, or an inner structural containment layer and an outer hydrocarbon barrier layer, wherein said outer layer is overmoulded on said inner layer, the method comprising:
- manufacturing a pair of complementary half-shells (20, 22) wherein the manufacture of each of said pair of half-shells includes injection-moulding a first material adapted to form said barrier layer or said structural containment layer according to a predetermined three-dimensional shape, and subsequently injection-overmoulding a second material adapted to form said structural containment layer on said moulded barrier layer or respectively said barrier layer on said moulded structural containment layer; and
- welding said half-shells along a perimeter contact line (J) so as to obtain at least a continuity of the respective barrier layers,
**characterized in that** it comprises including a carbon nanotube filler (N) in the second material of said structural layer which migrates towards a flame-exposed surface area of said second material and forms a protective mask against combustion for the rear-lying material.

9. Method according to Claim 8, wherein the moulding of said first material is performed in a first die of the mould having a predetermined shape and the moulding of said second material is performed in a second die of the mould having a shape geometrically similar to the shape of the first die, but enlarged in at least one direction of extension of the mould.

10. Method according to any one of Claims 8 or 9, wherein perimetral welding of the half-shells comprises welding together the respective barrier layers of the half-shells and welding together the respective structural containment layers of the half-shells, and
wherein at least welding together of the respective structural containment layers of the half- shells is performed by means of laser radiation striking a perimetral line of contact between the half-shells.

## Patentansprüche

1. Tank mit einer ersten und einer zweiten Halbschale (20, 22), die eine Kohlenwasserstoffgrenzschicht (B) aus einem ersten Material und eine strukturelle Umschließungsschicht (S) aus einem zweiten Material aufweisen, die jeweils eine innere Kohlenwasserstoffgrenzschicht und eine äußere strukturelle Umschließungsschicht oder eine innere strukturelle Umschließungsschicht und eine äußere Kohlenwasserstoffgrenzschicht bilden, wobei die äußere Schicht um die innere Schicht herum gegossen ist,
wobei die Halbschalen entlang einer Umfangskontaktlinie (J) derart miteinander verbunden sind, dass wenigstens eine Kontinuität der entsprechenden Grenzschichten erzielt wird,
**dadurch gekennzeichnet, dass** das zweite Material der strukturellen Schicht einen Kohlenstoffnanoröhrenfüller (N) an einer Flammen ausgesetzten Fläche umfasst, der eine Feuerschutzmaske für das dahinter liegende Material bildet.

2. Tank nach Anspruch 1, wobei das erste Material für das Ausbilden einer Grenzschicht ein EVOH ist und das zweite Material für das Ausbilden der strukturellen Umschließungschicht eine Mischung aus Polyethylen, einem Mittel für das Fördern einer Verbindung mit EVOH und einen Kohlenstoffnanoröhrenfüller ist.

3. Tank nach Anspruch 2, wobei der Kohlenstoffnanoröhrenfüller ein Füller mit einem Gewichtsanteil zwischen 1% und 20% ist.

4. Tank nach Anspruch 3, wobei der Kohlenstoffnanoröhrenfüller ein Füller mit einem Gewichtsanteil zwischen 1% und 5% ist.

5. Tank nach einem der vorstehenden Ansprüche, der eine obere Halbschale (20) und eine untere Halbschale (22) umfasst, wobei das zweite Material für das Bilden der strukturellen Umschließungsschicht der oberen Halbschale eine Mischung aus Polyethylen und einem Mittel für das Fördern einer Verbindung mit EVOH ist und das zweite Material für das Bilden der strukturellen Umschließungsschicht der unteren Halbschale eine Mischung aus Polyethylen, einem Mittel für das Fördern einer Verbindung mit EVOH und einem Kohlenstoffnanoröhrenfüller ist.

6. Tank nach einem der vorstehenden Ansprüche, wobei eine äußere Schicht in lokalisierten Bereichen Formungen für das Integrieren von funktionellen Komponenten des Tanks aufweist und wobei die Formungen für das Integrieren von funktionellen Komponenten des Tanks Öffnungsformationen in der Grenzschicht und Oberflächenlöcher in der strukturellen Umschließungsschicht, die ausgebildet sind, um die Öffnungsformationen der Grenzschicht freizulegen, umfassen.

7. Tank nach Anspruch 6, wobei die Öffnungsformationen in der Grenzschicht und die Oberflächenlöcher in der strukturellen Umschließungsschicht Formungen umfassen, die von der strukturellen Umschließungsschicht und/oder der Grenzschicht vorstehen und ausgebildet sind, um einen Einlass für das Zugreifen auf den Tank oder Verbindungen mit externen Leitungen zu bilden.

8. Verfahren zum Herstellen eines Kraftstofftanks mit einem mehrschichtigen Aufbau, der eine Kohlenwasserstoffgrenzschicht (B) aus einem ersten Material und eine strukturelle Umschließungsschicht (S) aus einem zweiten Material aufweist, die jeweils eine innere Kohlenwasserstoffgrenzschicht und eine äußere strukturelle Umschließungsschicht oder eine innere strukturelle Umschließungsschicht und eine äußere Kohlenwasserstoffgrenzschicht bilden, wobei die äußere Schicht um die innere Schicht herum gegossen ist, wobei das Verfahren umfasst:
- Herstellen eines Paars von komplementären Halbschalen (20, 22), wobei die Herstellung jeder aus dem Paar von Halbschalen (20, 22) das Spritzgießen eines ersten Materials für das Ausbilden der Grenzschicht oder der Umschließungsschicht in Entsprechung zu einer vorbestimmten dreidimensionalen Form und anschließend das Spritz-übergießen eines zweiten Materials für das Ausbilden der strukturellen Umschließungsschicht auf der gegossene Grenzschicht oder der Grenzschicht auf der gegossenen strukturellen Umschließungsschicht umfasst, und
- Verschweißen der Halbschalen entlang einer Umfangskontaktlinie (J), um wenigstens eine Kontinuität der entsprechenden Grenzschichten zu erzielen,
**dadurch gekennzeichnet, dass** das Verfahren das Einfügen eines Kohlenstoffnanoröhrenfilters (N) in dem zweiten Material der strukturellen Schicht umfasst, das zu einer Flammen ausgesetzten Oberfläche des zweiten Materials migriert und eine Feuerschutzmaske für das dahinter liegende Material bildet.

9. Verfahren nach Anspruch 8, wobei das Gießen des ersten Materials in einem ersten Formteil der Gussform mit einer vorbestimmten Form durchgeführt wird und das Gießen des zweiten Materials in einem zweiten Formteil der Gussform mit einer der Form des ersten Formteils geometrisch ähnlichen Form, die jedoch in wenigstens einer Erstreckungsrichtung der Gussform erweitert ist, durchgeführt wird.

10. Verfahren nach Anspruch 8 oder 9, wobei ein Umfangsschweißen der Halbschalen das Verschweißen der entsprechenden Grenzschichten der Halbschalen und das Verschweißen der entsprechenden strukturellen Umschließungsschichten der Halbschalen umfasst, und
wobei wenigstens das Verschweißen der entsprechenden strukturellen Umschließungsschichten der Halbschalen durch eine auf eine Umfangskontaktlinie zwischen den Halbschalen gerichtete Laserstrahlung durchgeführt wird.

## Revendications

1. Réservoir comprenant des première et seconde demi-coques (20, 22) comprenant une couche barrière d'hydrocarbure (B) composée d'un premier matériau et une couche de confinement structural (S) composée d'un second matériau, formant respectivement une couche barrière d'hydrocarbure interne et une couche de confinement structural externe, ou une couche de confinement structural interne et une couche barrière d'hydrocarbure externe, dans lequel ladite couche externe est surmoulée sur ladite couche interne,
dans lequel lesdites demi-coques sont assemblées le long d'une ligne de contact périmétrique (J) de manière à obtenir au moins une continuité des couches barrière respectives, et
**caractérisé en ce que** le second matériau de ladite couche structurale inclut une charge de nanotube de carbone (N) située au niveau d'une surface exposée aux flammes et formant un masque de protection contre la combustion pour le matériau reposant à l'arrière.

2. Réservoir selon la revendication 1, dans lequel ledit premier matériau adapté à former une couche barrière est de l'EVOH et ledit second matériau adapté à former la couche de confinement structural est un mélange de polyéthylène, d'un agent favorisant la liaison avec de l'EVOH et d'une charge de nanotube de carbone.

3. Réservoir selon la revendication 2, dans lequel ladite charge de nanotube de carbone est une charge comprise entre 1 % et 20 % en poids.

4. Réservoir selon la revendication 3, dans lequel ladite charge de nanotube de carbone est une charge comprise entre 1 % et 5 % en poids.

5. Réservoir selon l'une quelconque des revendications précédentes, comprenant une demi-coque supérieure (20) et une demi-coque inférieure (22), dans lequel le second matériau adapté à former la couche de confinement structural de la demi-coque supérieure est un mélange de polyéthylène et d'un agent favorisant la liaison avec de l'EVOH, et le second matériau adapté à former la couche de confinement structural de la demi-coque inférieure est un mélange de polyéthylène, d'un agent favorisant la liaison avec de l'EVOH et d'une charge de nanotube de carbone.

6. Réservoir selon l'une quelconque des revendications précédentes, dans lequel une couche externe présente dans des zones localisées des formations pour intégrer des composants fonctionnels du réservoir, et dans lequel lesdites formations pour intégrer des composants fonctionnels du réservoir incluent des formations d'ouverture dans la couche barrière et des trous de surface dans la couche de confinement structural adaptés à exposer lesdites formations d'ouverture de la couche barrière.

7. Réservoir selon la revendication 6, dans lequel lesdites formations d'ouverture dans la couche barrière et lesdits trous de surface dans la couche de confinement structural incluent des formations qui font saillie à partir de la couche de confinement structural et/ou la couche barrière et sont adaptées à former une ouverture pour accéder au réservoir ou des raccordements à des conduites externes.

8. Procédé de fabrication d'un réservoir de carburant doté d'une structure multicouches incluant une couche barrière d'hydrocarbure (B) composée d'un premier matériau et une couche de confinement structural (S) composée d'un second matériau, formant respectivement une couche barrière d'hydrocarbure interne et une couche de confinement structural externe, ou une couche de confinement structural interne et une couche barrière d'hydrocarbure externe, dans lequel ladite couche externe est surmoulée sur ladite couche interne, le procédé comprenant :
- la fabrication d'une paire de demi-coques complémentaires (20, 22) dans lequel la fabrication de chaque demi coque complémentaire (20, 22) de ladite paire de demi-coques inclut un moulage par injection d'un premier matériau adapté à former ladite couche barrière ou ladite couche de confinement structural selon une forme tridimensionnelle prédéterminée, et un surmoulage par injection ultérieur d'un second matériau adapté à former ladite couche de confinement structural sur ladite couche barrière moulée ou respectivement ladite couche barrière sur ladite couche de confinement structural moulée ; et
- le soudage desdites demi-coques le long d'une ligne de contact périmétrique (J) de manière à obtenir au moins une continuité des couches barrière respectives,
**caractérisé en ce qu'**il comprend l'inclusion d'une charge de nanotube de carbone (N) dans le second matériau de ladite couche structurale qui migre en direction d'une zone de surface exposée aux flammes dudit second matériau et forme un masque de protection contre la combustion pour le matériau reposant à l'arrière.

9. Procédé selon la revendication 8, dans lequel le moulage dudit premier matériau est réalisé dans une première matrice du moule présentant une forme prédéterminée et le moulage dudit second matériau est réalisé dans une seconde matrice du moule présentant une forme géométriquement similaire à la forme de la première matrice, mais agrandie dans au moins une direction d'extension du moule.

10. Procédé selon l'une quelconque des revendications 8 ou 9, dans lequel le soudage périmétrique des demi-coques comprend le soudage l'une à l'autre des couches barrière respectives des demi-coques et le soudage l'une à l'autre des couches de confinement structural respectives des demi-coques, et
dans lequel au moins le soudage l'une à l'autre des couches de confinement structural des demi-coques est réalisé au moyen de l'impact d'un rayonnement laser sur une ligne de contact périmétrique entre les demi-coques.
